# EUROPEAN PATENT APPLICATION

(11) **EP 3 725 434 A1**
(43) Date of publication of application: **21.10.2020**
(21) Application number: 20176032.9
(22) Date of filing: 13.06.2019
(51) Int. Cl.: B22F 3/00, B22F 3/10, B22F 3/22, C04B 35/638, C04B 35/64, C04B 26/02, B28B 7/38, B33Y 40/20, B33Y 10/00, B22F 3/105, B22F 5/10, C04B 111/00

(54) **SEPARATION OF NEAR NET SHAPE MANUFACTURED PARTS FROM SUPPORT STRUCTURES**

(30) Priority: 13.06.2018 US 201862684195 P
(62) Divisional of application: 19820649.2
(71) Applicant: Rize Inc., Woburn, MA 01801 (US)
(72) Inventor: GILLER, Eugene, Wellesley, MA Massachusetts 02482 (US); O'HARA, Nathalie P., Bedford, MA Massachusetts 01730 (US)
(74) Representative: Peterreins Schley

(57) **Abstract**

Systems and corresponding methods are provided for separation of support structures from near net shape manufactured parts. The system can include a support structure and a non-adhering material. The non-adhering material can be positioned on one or more predetermined exterior-facing surfaces of the support structure. The support system can be dimensioned for receipt within a void space of a porous green body defined by an overhang region of the porous green body. After receipt within a void space of a porous green body that undergoes a thermally-induced volumetric change, the support system can be configured to support the overhang region and the non-adhering material can be configured to inhibit adherence of the exterior-facing surfaces of the support structure to opposed surfaces of the void space.

## Description

### CROSS-REFERENCE TO RELATED APPLICATIONS

This application claims the benefit of U.S. Provisional Patent Application No. 62/684,195, filed on June 13, 2018, entitled "Separation of Near Net Shape Manufactured Parts From Support Structures," the entirety of which is hereby incorporated by reference.

### BACKGROUND

Production of manufactured parts can include initial forming processes that produce an initial work piece and finishing processes that produce a final part from the initial work piece. Near net shape forming refers to initial forming processes that produce a work piece that is very close to a desired final (net) shape. As a result, finishing processes such as machining and grinding, can be reduced or substantially eliminated. Because finishing operations can represent more than half the total cost of producing a manufactured item, there is an ongoing need for new and improved near net shape forming processes.

### SUMMARY

There exist a variety of near net shape forming processes suitable for fabrication of metal and ceramic parts. In one example, powder injection molding (PIM) employs a mixture of powders of a ceramic or metal mixed with a binder to form a feedstock that is injection molded to form a green body that is subsequently processed to form a near net shape work piece. In another example, additive manufacturing (e.g., solid freeform fabrication or layer manufacturing) is a class of a manufacturing processes that can employ computer aided design (CAD) outputs to build an object on a layer-by-layer and point-by-point basis to form a green body that is subsequently processed to form a near net shape work piece..

While the manner of forming the green body can differ between PIM and the various additive manufacturing processes, the green body can be processed in a similar manner for each to form the near net shape work piece. In a debinding process, some or all of the binder is removed from the green body to form a brown body. The brown body is then heated (sintered) to consolidate the brown body and form the work piece. In certain manufacturing operations, debinding and sintering can be performed simultaneously.

Regardless of the specific manner in which the green body is formed, near net shape forming processes can commonly employ support structures. Support structures can be positioned at predetermined locations with respect to a green body for mechanical support. As an example, parts can be designed with open spaces (e.g., voids) and regions that overlie the open space, also referred to overhang. If unsupported during debinding and/or sintering, overhangs can sag or collapse under their own weight, producing a work piece that is deformed as compared to a desired near net shape.

However, the use of support structures can present challenges. As an example, a green body undergoing debinding/sintering will shrink as void space between the powder is reduced. If the support structure does not shrink at approximately the same rate as the green/brown body, the part can be deformed or damaged. In one aspect, when the support structure shrinks too fast, it can fail to support the green/brown body. In another aspect, when the support structure shrinks too slow, it can exert forces on the green/brown body that cause the green/brown body to crack or break. In another example, it can be difficult to remove support structure from the near net shape work piece. While various approaches have been developed to address this concern, such as breaking the support structure and dissolving or melting the support structure, these approaches can result in imperfections on the surface of the work piece and necessitate further finishing operations.

In general, systems and methods are provided for separation of support structures from near net shape manufactured parts.

In one embodiment, a system is provided and can include a support structure and a non-adhering material. The non-adhering material can be positioned on one or more predetermined exterior-facing surfaces of the support structure. The support system can be dimensioned for receipt within a void space of a porous green body defined by an overhang region of the porous green body. After receipt within a void space of a porous green body that undergoes a thermally-induced volumetric change, the support system can be configured to support the overhang region and the non-adhering material can be configured to inhibit adherence of the exterior-facing surfaces of the support structure to opposed surfaces of the void space.

In another embodiment, after receipt within a void space of a green body that undergoes a thermally-induced volumetric change, the support system can be configured to undergo a volumetric change that occurs at a rate that can be approximately equal to the rate of volumetric change of the void space.

In another embodiment, after receipt within a void space of a green body that undergoes a thermally-induced volumetric change, the support system can be configured to maintain at least a portion of the support structure in contact with an underlying surface of the overhang region.

In another embodiment, the support structure can be formed from a support composition that can include at least one support powder and at least one support binder.

In another embodiment, the at least one support powder includes at least one of metal powders or ceramic powders.

In another embodiment, the support binder includes at least one of an organic polymer or an inorganic material.

In another embodiment, the non-adhering material can be formed from a non-adhering composition that can include at least one non-adhering powder dispersed in at least one non-adhering binder.

In another embodiment, the at least one non-adhering powders can include at least one of oxides, carbides, sulfides, nitrides, fluorides, ceramics, or metals.

In another embodiment, the at least one non-adhering powder can include at least one of silicon dioxide, refractory sands, aluminum oxide, titanium oxide, vanadium oxide, molybdenum oxide, or zirconium oxide.

In another embodiment, a mean particle size of the at least one non-adhering powder can be approximately equal to a mean particle size of the at least one green body powder.

In another embodiment, a mean particle size of the at least one non-adhering powder can be less than 250 µm.

In another embodiment, a mean particle size of the at least one non-adhering powder can be selected from the range of about 5 µm to about 50 µm.

In another embodiment, the at least one non-adhering binder can include an organic polymer.

In another embodiment, the at last one non-adhering binder can include at least one of polyvinyl alcohol (PVA), sodium silicate, potassium silicate, polyvinyl acetate, gelatin, polyvinyl pyrrolidone, Polyacrylamide, Polyacrylic acid and copolymers, polyethylene glycols, Polyamines, polyethyleneimines, quaternary ammonium compounds, Polyvinyl methyl ether/maleic anhydride, polyurethanes and their suspensions, polyolefins, polyacetals, organic waxes, or carboxypolymethylene.

In another embodiment, a geometry of exterior-facing surfaces of the support structure can be configured to substantially mirror a geometry of opposed surfaces of a void space of a green body that the support structure can be dimensioned for receipt within.

In another embodiment, the non-adhering material can be in the form of a coating on the exterior-facing surfaces of the support structure.

In another embodiment, a geometry of exterior-facing surfaces of the support structure does not substantially mirror a geometry of opposed inward facing surfaces of a void space of a green body that the support structure can be dimensioned for receipt within, and wherein the non-adhering material can be in the form of a paste that can be configured to fill one or more gaps between the exterior-facing surfaces of the support structure and the opposed surfaces of the void space.

In another embodiment, the support system includes a plurality of support sub-structures having a portion of the non-adhering material interposed between respective ones of the support sub-structures.

Embodiments of the support sub-structures can adopt a variety of configurations. In one aspect, the support sub-structures can be pyramids. In another embodiment, the support sub-structures can be plates.

In a further embodiment, a method is provided. The method can include providing a porous green body formed from at least one green body powder and at least one green body binder, the green body including a geometry including a predetermined void space defining an overhang region; applying a non-adhering material to one or more predetermined exterior-facing surfaces of a support structure while the support structure is distanced from the void space to form a support system, inserting at least a portion of the support system within the void space; debinding the green body after insertion of the support system according to a predetermined debinding temperature profile to remove a predetermined portion of the green body binder from the green body; and sintering the green body according to a predetermined sintering temperature profile after insertion of the support system to form a consolidated work piece including a predetermined porosity. The non-adhering material can be configured to inhibits adherence of the green body and the consolidated work piece to the support structure. The support system can be dimensioned to support at least a portion of the overhang region during debinding and sintering.

In another embodiment, the method can also include removing the support system from the consolidated work piece after sintering.

In another embodiment, providing the green body can include forming the green body by injection molding a green body composition including the at least one green body powder and the at least one green body binder.

In another embodiment, providing the green body can include forming the green body from successively deposited layers of a green body composition including the at least one green body powder and the at least one green body binder.

In another embodiment, depositing the layers can include extruding a second green body composition including the at least one green body powder and the at least one green body binder.

In another embodiment, depositing the layers can include spraying the at least one green body binder onto a bed of the at least one green body powder.

In another embodiment, the at least one green body powder can include at least one of metal powders or ceramic powders.

In another embodiment, the at least one green body binder can include an organic polymer.

In another embodiment, the support structure can be formed from a support composition that can include at least one support powder and at least one support binder.

In another embodiment, the at least one support powder can include at least one of metal powders or ceramic powders.

In another embodiment, the at least one support binder can include at least one of an organic polymer or an inorganic material.

In another embodiment, the non-adhering material can be formed from a non-adhering composition including at least one non-adhering powders dispersed in at least one non-adhering binder.

In another embodiment, the at least one non-adhering powders can include at least one of oxides, carbides, sulfides, nitrides, fluorides, ceramics, or metals.

In another embodiment, the at least one non-adhering powder can include at least one of silicon dioxide, refractory sands, aluminum oxide, titanium oxide, vanadium oxide, molybdenum oxide, or zirconium oxide.

In another embodiment, a mean particle size of the at least one non-adhering powder can be approximately equal to a mean particle size of the at least one green body powder.

In another embodiment, a mean particle size of the at least one non-adhering powder can be less than 250 µm.

In another embodiment, a mean particle size of the at least one non-adhering powder can be selected from the range of about 5 µm to about 50 µm.

In another embodiment, the at least one non-adhering powder does not undergo sintering at the predetermined sintering temperature.

In another embodiment, the at least one non-adhering powder undergoes sintering at a higher temperature than the at least one green body powder.

In another embodiment, the at least one non-adhering powder undergoes sintering to itself at the predetermined sintering temperature and does not undergo sintering to the green body at the predetermined sintering temperature.

In another embodiment, the at least one non-adhering binder includes an organic polymer.

In another embodiment, the at least one non-adhering binder includes at least one of polyvinyl alcohol (PVA), sodium silicate, potassium silicate, polyvinyl acetate, gelatin, polyvinyl pyrrolidone, Polyacrylamide, Polyacrylic acid and copolymers, polyethylene glycols, Polyamines, polyethyleneimines, quaternary ammonium compounds, Polyvinyl methyl ether/maleic anhydride, polyurethanes and their suspensions, polyolefins, polyacetals, organic waxes, or carboxypolymethylene.

In another embodiment, a volumetric concentration of the at least one green body powder in the green body composition forming the green body can be approximately equal to a volumetric concentration of the at least one non-adhering powder in the non-adhering material composition.

In another embodiment, a rate of volumetric reduction of the void space occurring during sintering can be approximately equal to a rate of volumetric reduction of the support system during sintering.

In another embodiment, the support system can be configured such that at least a portion of exterior-facing surfaces of the non-adhering material remain in contact with the green body during sintering.

In another embodiment, debinding can be performed concurrently with sintering.

In another embodiment, a geometry of exterior-facing surfaces of the support structure positioned opposite inward facing surfaces of the void space can be configured to substantially mirror a geometry of the opposed inward facing surfaces of the void space.

In another embodiment, the non-adhering material can be in the form of a coating on the exterior-facing surfaces of the support structure.

In another embodiment, a geometry of exterior-facing surfaces of the support structure positioned opposite inward-facing surfaces of the void space does not substantially mirror a geometry of opposed inward facing surfaces of the void space, and wherein the non-adhering material can be in the form of a paste that fills one or more gaps between exterior-facing surfaces of the support structure and the opposed inward facing surfaces of the void space.

In another embodiment, the support system includes a plurality of support sub-structures having a portion of the non-adhering material interposed between respective ones of the support sub-structures.

Embodiments of the support sub-structures can adopt a variety of configurations. In one aspect, the support sub-structures can be pyramids. In another aspect, the support sub-structures can be plates.

In another embodiment, a system is provided and it can include a green body and a support system. The green body can be porous and it can include layers of a green body composition. The green body can also include a geometry including a predetermined void space defining an overhang region. The a support system can include a support structure and a non-adhering material, the support structure including layers of a support composition and the non-adhering material including layers of a non-adhering composition. The non-adhering material can be interposed between the green body and the support structure. The support system can be positioned within a void space of the porous green body defined by an overhang region of the porous green body. In response to the porous green body undergoing a thermally-induced volumetric change, the support system can support the overhang region, and the non-adhering material can inhibit adherence of exterior-facing surfaces of the support structure to opposed surfaces of the void space.

In another embodiment, wherein the support system can be configured to undergo a volumetric change that occurs at a rate that can be approximately equal to a volumetric change of the void space.

The system of claim 53, wherein the support system can be configured to maintain at least a portion of the support structure in contact with an underlying surface of the overhang region.

In another embodiment, the layers of the green body can be are formed from a green body composition that can include at least one green body powder and at least one green body binder.

In another embodiment, the at least one green body powder can include at least one of metal powders or ceramic powders.

In another embodiment, the at least one green body binder can include an organic polymer.

In another embodiment, the layers of the support structure can be formed from a support structure composition that can include at least one support powder and at least one support binder.

In another embodiment, the at least one support powder can include at least one of metal powders or ceramic powders.

In another embodiment, the at least one support binder can include at least one of an organic polymer or an inorganic material.

In another embodiment, the green body and the support structure can be formed from the same material.

In another embodiment, the non-adhering composition can include at least one non-adhering powder dispersed in at least one non-adhering binder.

In another embodiment, the at least one non-adhering powder can include at least one of oxides, carbides, sulfides, nitrides, fluorides, ceramics, or metals.

In another embodiment, the at least one non-adhering powder can include at least one of silicon dioxide, refractory sands, aluminum oxide, titanium oxide, vanadium oxide, molybdenum oxide, or zirconium oxide.

In another embodiment, a mean particle size of the at least one non-adhering powder can be approximately equal to a mean particle size of the at least one green body powder.

In another embodiment, a mean particle size of the at least one non-adhering powders can be less than 250 µm.

In another embodiment, a mean particle size of the at least one non-adhering powders can be selected from the range of about 5 µm to about 50 µm.

In another embodiment, a maximum particle size of the at least one non-adhering powder can be less than a thickness of the layers containing the non-adhering material.

In another embodiment, the at least one non-adhering binder can include at least one of polyvinyl alcohol (PVA), sodium silicate, potassium silicate, polyvinyl acetate, gelatin, polyvinyl pyrrolidone, Polyacrylamide, Polyacrylic acid and copolymers, polyethylene glycols, Polyamines, polyethyleneimines, quaternary ammonium compounds, Polyvinyl methyl ether/maleic anhydride, polyurethanes and their suspensions, polyolefins, polyacetals, organic waxes, or carboxypolymethylene.

In another embodiment, in response to the green body undergoing a thermally-induced volumetric change, the support system can be configured to undergo a volumetric change at a rate that can be approximately equal to a rate of volumetric change of the void space.

In another embodiment, in response to the green body undergoing a thermally-induced volumetric change, the support system can be configured such that at least a portion of exterior-facing surfaces of the non-adhering material remain in contact with the green body.

In another embodiment, the non-adhering material can be formed from reagents that are configured to undergo a chemical and/or physical reaction in combination to form the non-adhering material.

In another embodiment, the reagents can include a water soluble salt of a heavy metal; and hydroxide or a salt of a weak acid that thermally decomposes. The decomposition products can be at least one of a water insoluble hydroxide; or an inorganic material capable of dissolution in a solvent and recovered by drying. The hydroxide can be sodium hydroxide and the salt of a weak acid can be a sodium or a potassium salt.

In another embodiment, the support system comprises a plurality of support sub-structures having a portion of the non-adhering material interposed between respective ones of the support sub-structures.

Embodiments of the support sub-structures can adopt a variety of configurations. In one aspect, the support sub-structures can be pyramids. In another aspect, the support sub-structures can be plates.

In another embodiment, a method is provided. The method can include forming a porous green body from successively deposited layers of a green body composition, the green body including a geometry including a predetermined void space defining an overhang region and forming a support system concurrently with the green body from successively deposited layers of a support structure that can include a support composition and a non-adhering material that can include a non-adhering composition. The non-adhering material can be interposed between the green body and the support structure. The method can further include debinding the green body after formation of the support system according to a predetermined debinding temperature profile such that a predetermined portion of the green body binder is removed from the green body; and sintering the green body according to a predetermined sintering temperature profile to form a consolidated work piece including a predetermined porosity. The non-adhering material can be configured to inhibits adherence of the green body and the consolidated work piece to the support structure. The support system can be dimensioned to inhibit sagging of the overhang region during debinding and sintering.

In another embodiment, the method can include removing the support system from the consolidated work piece after sintering.

In another embodiment, the green body composition can include at least one green body powder and at least one green body binder.

In another embodiment, the at least one green body powder can include at least one of metal powders and ceramic powders.

In another embodiment, the at least one green body binder can include an organic polymer.

In another embodiment, the support composition can include at least one support powder and at least one support binder.

In another embodiment, the at least one support powder can include at least one of metal powders or ceramic powders.

In another embodiment, the at least one support binder can include at least one of an organic polymer or an inorganic material.

In another embodiment, the green body composition and the support composition can be the same.

In another embodiment, the non-adhering composition can include at least one non-adhering powder dispersed in at least one non-adhering binder.

In another embodiment, the at least one non-adhering powder can include at least one of oxides, carbides, sulfides, nitrides, fluorides, ceramics, or metals.

In another embodiment, the at least one non-adhering powder can include at least one of silicon dioxide, refractory sands, aluminum oxide, titanium oxide, vanadium oxide, molybdenum oxide, or zirconium oxide.

In another embodiment, a mean particle size of the at least one non-adhering powder can be approximately equal to a mean particle size of the at least one green body powder. In another embodiment, a mean particle size of the at least one non-adhering powder can be less than 250 µm.

In another embodiment, a mean particle size of the at least one non-adhering powder can be selected from the range of about 5 µm to about 50 µm.

In another embodiment, a maximum particle size of the at least one non-adhering powder can be less than a thickness of the layers containing the non-adhering material.

In another embodiment, the at least one non-adhering powder does not undergo sintering at the predetermined sintering temperature.

In another embodiment, the at least one non-adhering powder can undergo sintering at a higher temperature than the predetermined sintering temperature.

In another embodiment, the at least one non-adhering powder undergoes sintering to itself at the predetermined sintering temperature and does not undergo sintering to the green body at the predetermined sintering temperature.

In another embodiment, the at least one non-adhering binder can include at least one of polyvinyl alcohol (PVA), sodium silicate, polyvinyl alcohol (PVA), sodium silicate, potassium silicate, polyvinyl acetate, gelatin, polyvinyl pyrrolidone, Polyacrylamide, Polyacrylic acid and copolymers, polyethylene glycols, Polyamines, polyethyleneimines, quaternary ammonium compounds, Polyvinyl methyl ether/maleic anhydride, polyurethanes and their suspensions, polyolefins, polyacetals, organic waxes, or carboxypolymethylene.

In another embodiment, a volumetric concentration of the at least one non-adhering powder in the non-adhering composition can be approximately equal to a volumetric concentration of the at least one green body powder in the green body composition.

In another embodiment, a volumetric reduction of the support system during debinding and sintering of the green body can occur at a rate that can be approximately equal to a volumetric reduction of the void space.

In another embodiment, the support system can be configured such that at least a portion of exterior-facing surfaces of the non-adhering material remain in contact with the green body during sintering.

In another embodiment, debinding can be performed concurrently with sintering.

In another embodiment, the non-adhering material can be formed from reagents configured to undergo a chemical and/or physical reaction in combination to form the non-adhering material.

In another embodiment, the reagents can include a water soluble salt of a heavy metal; and a hydroxide or a salt of a weak acid that thermally decomposes. The thermal decomposition product can include at least one of a water insoluble hydroxide or an inorganic material capable of dissolution in a solvent and recovered by drying. The hydroxide can be sodium hydroxide and the salt of a weak acid can be a sodium or a potassium salt.

The support system can include a plurality of support sub-structures having a portion of the non-adhering material interposed between respective ones of the support sub-structures.

Embodiments of the support sub-structures can adopt a variety of configurations. In one aspect, the support sub-structures can be pyramids. In another aspect, the support sub-structures can be plates.

### BRIEF DESCRIPTION OF THE DRAWINGS

These and other features will be more readily understood from the following detailed description taken in conjunction with the accompanying drawings, in which:
FIG. 1 is a flow diagram illustrating one exemplary embodiment of a method for removal of a near net shape manufactured part from a support structure;
FIG. 2 is a diagram illustrating one exemplary embodiment of a green body and support structures dimensioned for receipt within corresponding void spaces of the green body;
FIG. 3 is a diagram illustrating one exemplary embodiment of the green body and support structures of FIG. 2 including a non-adhering material applied to selected exterior-facing surfaces of the support structures to form support systems;
FIG. 4 is a diagram illustrating one exemplary embodiment of the green body of FIG. 2 after insertion of the support systems into respective void spaces;
FIG. 5 is a diagram illustrating one exemplary embodiment of the green body and support systems of FIG. 4 subjected to a debinding process to form a debinded green body;
FIG. 6 is a diagram illustrating one exemplary embodiment of the debinded green body of FIG. 5 subjected to a sintering process to form a sintered work piece;
FIG. 7 is a diagram illustrating one exemplary embodiment of the sintered work piece of FIG. 6 after removal of the support structures from respective void spaces;
FIG. 8 is a flow diagram illustrating an exemplary embodiment of a method for removal of a broken support structure from a near net shape manufactured part;
FIG. 9 is a diagram illustrating one exemplary embodiment of a green body, broken support structures dimensioned for receipt within corresponding void spaces of the green body, and a non-adhering material in the form of a paste applied to selected exterior-facing surfaces of the broken support structures to form broken support systems;
FIG. 10 is a diagram illustrating one exemplary embodiment of the green body and broken support systems of FIG. 9 after insertion of the support systems into respective void spaces;
FIG. 11 is a diagram illustrating one exemplary embodiment of the green body of FIG. 10 subjected to a debinding process to form a debinded green body;
FIG. 12 is a diagram illustrating one exemplary embodiment of the debinded green body of FIG. 11 subjected to a sintering process to form a sintered work piece;
FIG. 13 is a diagram illustrating one exemplary embodiment of the sintered work piece of FIG. 14 after removal of the broken support structures from respective void spaces;
FIG. 14 is a diagram illustrating one exemplary embodiment of a green body, a first support system and a second support system. The first support system includes a non-adhering material applied to selected exterior-facing surfaces of an undamaged support structure. The second support system includes a damaged support structure including a non-adhering material in the form of a paste applied to selected exterior-facing surfaces of a broken support structure;
FIG. 15 is a flow diagram illustrating one exemplary embodiment of a method for removal of a support system from a near net shape manufactured part, where the support system and the part are formed concurrently using an additive manufacturing process;
FIG. 16 is a diagram illustrating one exemplary embodiment of a green body and a support system including a support structure and a non-adhering material deposited therebetween;
FIG. 17 is a diagram illustrating one exemplary embodiment of the green body and support systems of FIG. 16 subjected to a debinding process to form a debinded green body;
FIG. 18 is a diagram illustrating one exemplary embodiment of the debinded green body of FIG. 17 subjected to a sintering process to form a sintered work piece;
FIG. 19 is a diagram illustrating one exemplary embodiment of the sintered work piece of FIG. 18 after removal of the support structures from respective void spaces;
FIG. 20 is a schematic illustration of one exemplary embodiment of a support system including a support structure formed from a plurality of tightly fitted support sub-structures (e.g., pyramids) having non-adhering material interposed therebetween;
FIG. 21 illustrates removal of a support sub-structure from the support structure of FIG. 20;
FIG. 22 is a schematic illustration of another embodiment of a support system including a support structure formed from a plurality of stacked sub-structures (e.g., plates) having non-adhering material interposed therebetween; and
FIG. 23 illustrates removal of a support sub-structure from the support structure of FIG. 22.

It is noted that the drawings are not necessarily to scale. The drawings are intended to depict only typical aspects of the subject matter disclosed herein, and therefore should not be considered as limiting the scope of the disclosure. Those skilled in the art will understand that the systems, devices, and methods specifically described herein and illustrated in the accompanying drawings are non-limiting exemplary embodiments and that the scope of the presently disclosed embodiments is defined solely by the claims.

### DETAILED DESCRIPTION

As discussed above, there exist a variety of near net shape forming processes suitable for fabrication of metal and ceramic parts, and these processes can employ support structures positioned at predetermined locations with respect to a green body for mechanical support. However, in use, support structures can damage the green body during manufacturing or the fabricated near net shape part when removed. Accordingly, improved systems and methods are provided for removal of support structures from near net shape manufactured parts. Near net shape manufactured parts can also be referred to herein as work pieces.

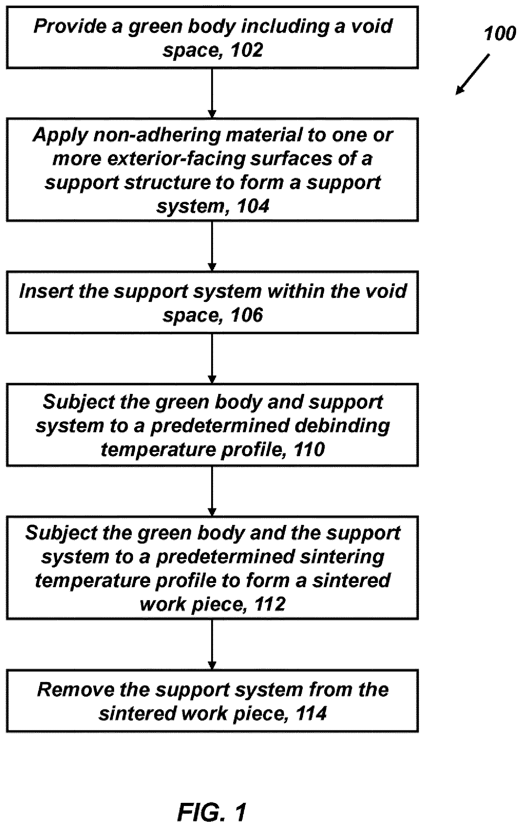

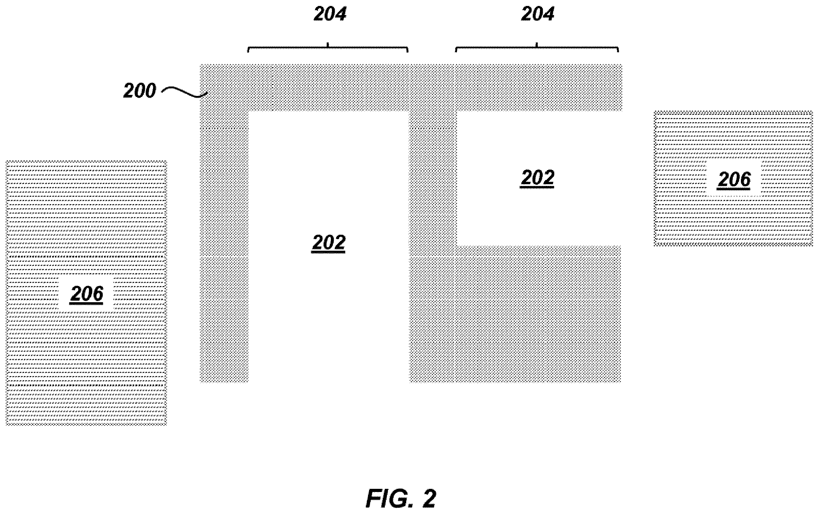

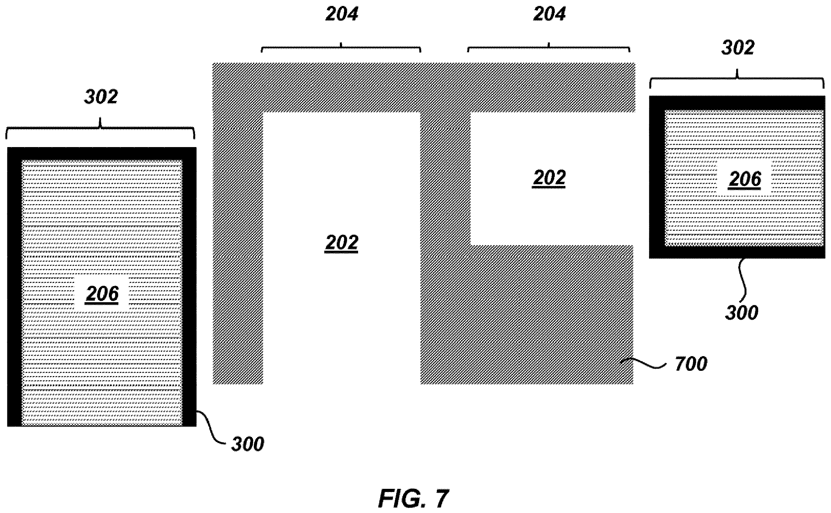

FIG. 1 is a flow diagram illustrating one exemplary embodiment of a method 100 for removal of a support structure from a near net shape manufactured part. The method 100 is discussed in detail below with respect to FIGS. 2-7. As shown, the method 100 includes operations 102-114. It can be understood that, selected operations of the method of FIG. 1 can be performed in an order different than that illustrated and one or more operations can be added or removed without limit.

In an embodiment, operation 102 of the method 100 of FIG. 1 includes providing a porous green body 200 formed from at least one green body powder and at least one green body binder. As illustrated in FIG. 2, the formed green body 200 can include one or more void spaces 202 defined by a corresponding overhang region (e.g., 204) of the green body 200. The at least one green body powder can include least one of metal powders, ceramic powders, or combinations thereof. The at least one green body binder can include at least one organic polymer. Other powders and binders are also contemplated.

The green body 200 can be formed by a variety of manufacturing processes. In one example, the manufacturing process can be an injection molding process (e.g., powder injection molding) that employs a composition including the at least one green body powders and the at least one green body binder. As an example, a metal green body can be formed by a metal injection molding (MIM) process, while a ceramic green body can be formed by a ceramic injection molding (CIM) process.

In another example, the manufacturing process can be an additive manufacturing process. The additive manufacturing process can form the green body 200 from successively deposited layers of a green body composition including the at least one green body powder and the at least one green body binder.

Additive manufacturing processes can include, but are not limited to, VAT photo polymerization, material jetting, binder jetting, material extrusion, powder bed fusion, sheet lamination, directed energy deposition, or combinations thereof. In one embodiment, the layers of the green body 200 can be formed by deposition of a bed of the green body powder (e.g., ceramic powder, metal powder, etc.) and the green body binder can be jetted over a predetermined cross-sectional area for the geometry of the green body 200 at the location of respective deposited powder layers. In another embodiment, the layers of the green body 200 can be formed by extrusion of a composition including the at least one green body powder and the at least one green body binder can be extruded. In a further embodiment, the green body 200 can be formed according to International Application No. PCT/US2017/042223, filed on July 14, 2017 and entitled "Method of Fabricating A Three Dimensional Object With Removable Support Structure," the entirety of which is hereby incorporated by reference.

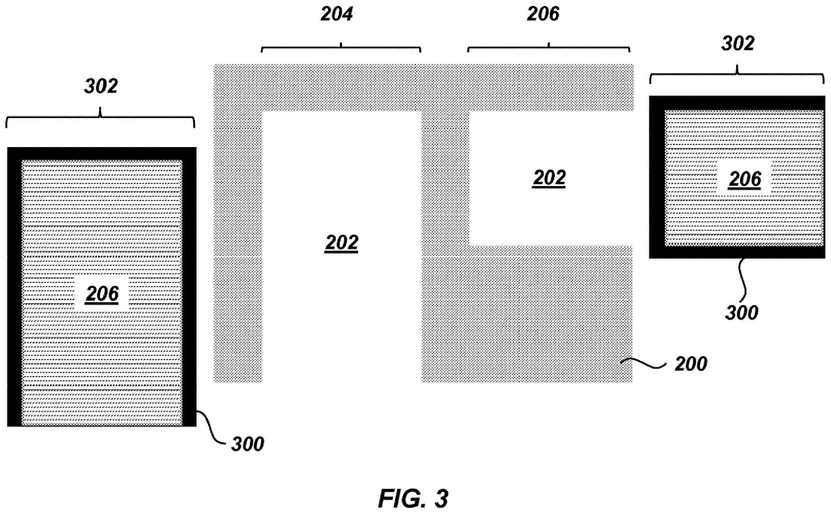

In an embodiment, operation 104 of the method of FIG. 1 can include applying a non-adhering material 300 to one or more predetermined exterior-facing surfaces of at least one support structure 206 while the support structure 206 is distanced from the void space 202 of the green body 200 (FIG. 3). The combination of the support structures 206 and the non-adhering material 300 can be referred to herein as a support system. In certain embodiments, the support structure 206 can be a support structure employed during formation of the green body.

The support structure 206 can be formed from a support structure composition including at least one support structure powder and at least one support structure binder. The at least one support structure powder can include least one of metal powders, ceramic powders, or combinations thereof. The support structure binder can include at least one of organic polymers or inorganic materials.

The support structure 206 can be formed from the support structure composition by any manufacturing process. As an example, the support structure 206 can be formed by at least one of injection molding or additive manufacturing, as discussed above. In certain embodiments, the support structure 206 can be formed by the same manufacturing process as the green body.

The support structure 206 can be configured such that it undergoes a rate of volumetric reduction during sintering that is approximately equal to a rate of volumetric contraction of the void space 202 in which it is received. This rate of volumetric contraction can ensure that the non-adhering material 300 remains in contact with opposed surfaces of the green body 200 during manufacturing. In another aspect, this rate of volumetric contraction can inhibit exertion of force on the green body 200 due to differential contraction of the support structure 206 and the green body 200. As a result, the support structure 206 can support the green body 200 sufficiently during manufacturing to avoid undesired deformation, cracking, and/or failure of the green body 200.

The non-adhering material 300 can be formed from a non-adhering material composition including at least one non-adhering powder and at least one non-adhering binder. A volumetric concentration of the at least one non-adhering powder in the non-adhering material composition can be approximately equal to a volumetric concentration of the at least one green body powder in the green body composition.

The at least one non-adhering powder can include, but is not limited to, at least one of oxides, carbides, sulfides, nitrides, fluorides, ceramics, or metals. In certain embodiments, the at least one non-adhering powder can include at least one of silicon dioxide, refractory sands, aluminum oxide, titanium oxide, vanadium oxide, molybdenum oxide, or zirconium oxide

The non-adhering binder can include at least one organic polymer. In certain embodiments, the at least one non-adhering powder can include at least one of polyvinyl alcohol (PVA), sodium silicate, potassium silicate, polyvinyl acetate, gelatin, polyvinyl pyrrolidone, polyacrylamide, polyacrylic acid and copolymers, polyethylene glycols, polyamines, polyethyleneimines, quaternary ammonium compounds, polyvinyl methyl ether/maleic anhydride, polyurethanes and their suspensions, polyolefins, polyacetals, organic waxes, or carboxypolymethylene. Other powders and binders are also contemplated.

As discussed below, the non-adhering material 300 can be configured to inhibit adherence of the support structure 206 to the green body 200 and the work piece. In this manner, damage to the near net shape part formed from the green body 200 can be avoided when removing the support structure 206.

The non-adhering material 300 can inhibit adherence in a variety of ways. In one aspect, the non-adhering material 300 can remain interposed between the part and the support structure 206 during manufacturing.

In another aspect, the non-adhering material 300 can be configured to undergo sintering at a temperature that is higher than a starting sintering temperature of the one or more green body powder. As an example, the at least one non-adhering powder can be configured to undergo sintering at a temperature that is about 20°C or greater than a starting sintering temperature of the at least one green body powder.

In a further aspect, the non-adhering material 300 can undergo sintering within itself during manufacturing of the part but is configured to not sinter to the green body 200 or the part. As an example, the part can be formed from a material to which the non-adhering material 300 does not sinter. In one embodiment, the part can be formed from metal powders and the non-adhering material 300 can be formed from ceramic powders.

In an additional aspect, embodiments of the non-adhering material 300 can be configured to undergo a chemical and/or physical reaction to form a modified non-adhering material. The modified non-adhering material can be configured to inhibit adhesion of the support structure 206 from the green body 200 and work piece (e.g., debinded and/or sintered work piece, as discussed below) according to any of the mechanisms discussed above. It can be understood that discussion of the non-adhering material 300 herein is inclusive of such modified non-adhering materials.

A composition of the modified non-adhering material can include a water soluble salt of a heavy metal and sodium hydroxide or a sodium or potassium salt of a weak acid that thermally decomposes. The thermal decomposition products can be a water insoluble hydroxide or an inorganic material capable of dissolution in a solvent and recovered by drying.

The size of the non-adhering powders can be selected such that a mean particle size (e.g., mean diameter) of the non-adhering particles is approximately equal to a mean particle size of the green body powder. In one example, the mean particle size of the non-adhering particles can be less than 250 µm. In another example, the mean particle size of the non-adhering particles can be less than 250 µm and greater than 50 µm. In a further example, the mean particle size of the non-adhering particles can be less than 50 µm. In an additional example, the mean particle size of the non-adhering particles can be selected from the range of 5 µm to 50 µm.

The non-adhering material 300 can be applied to exterior-facing surfaces of the support structure 206 in a variety of ways. In one example, the non-adhering material 300 can be in the form of a coating applied to the support structure 206 by dipping the predetermined exterior-facing surfaces of the support structure 206 in the non-adhering material coating. In another example, the non-adhering material 300 can be in the form of a coating applied to the green body 200 by dipping at least a portion of the green body 200 containing the void space 202 in the non-adhering material coating. At least a portion of the non-adhering material 300 can be further transferred from the outer surface of the void space 202 to the predetermined exterior-facing surfaces of the support structure 206 when the support structure 206 is inserted within the void space 202.

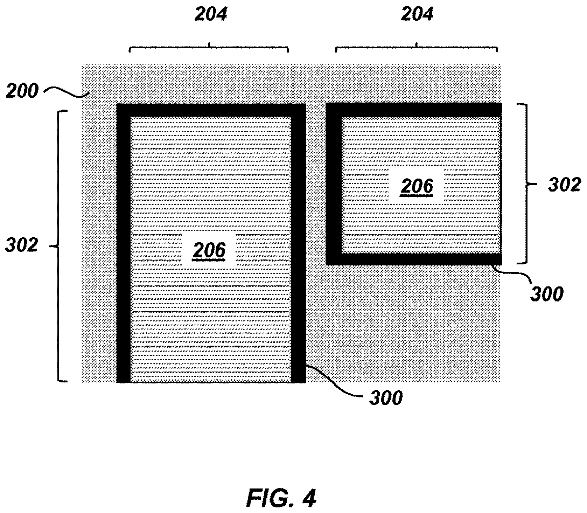

In an embodiment, operation 106 of the method 100 of FIG. 1 can include inserting the support system 302 within the void space 202. As illustrated in FIG. 4, the support structure 206 can be dimensioned such that the non-adhering coating 300 deposited on the outer surface of the support structure 206 contacts at least a portion of opposed surfaces of the green body 200 when inserted within the void space 202. As an example, a geometry of at least one of the exterior facing surfaces of the support structure 206 can approximately mirror a geometry of the opposed surfaces of the void space 202 of the green body 200 that the support structure 206 is dimensioned for receipt within. As an example, a gap between an exterior facing surface of the support structure 206 and an opposed surface of the green body 200 can be less than a threshold amount. The threshold amount can less than or equal to the size of the at least one non-adhering powder.

In an embodiment, the method 100 of FIG. 1 can optionally include operation 110. In operation 110, the green body 200 and the support system 302 can be subjected to a predetermined debinding temperature to remove a predetermined portion of the binder from the green body 200. Concurrently, at least a portion of the support structure binder and/or the non-adhering material binder can be removed as well. The predetermined portion of binder removed from the green body 200 can be selected from about 50 % to about 100% of the binder on the basis of an amount of binder present within the green body 200 prior to debinding.

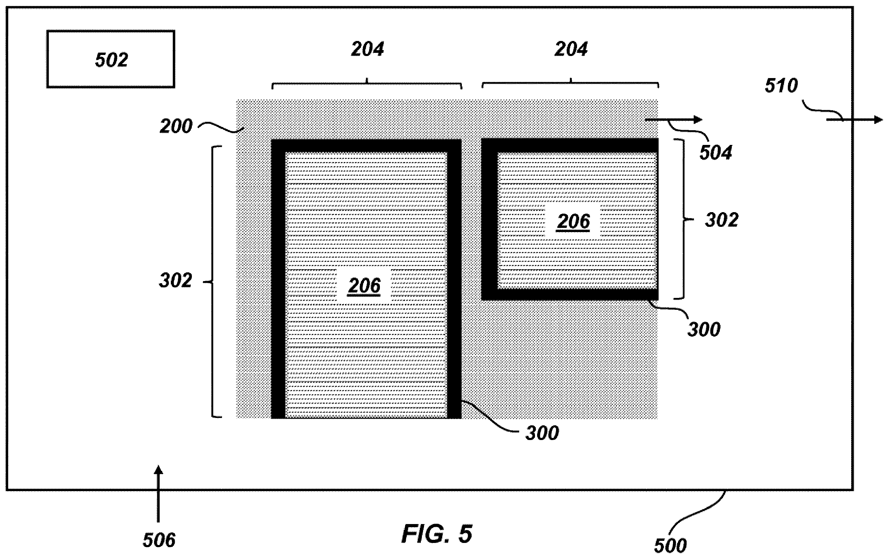

As shown in FIG. 5, the green body 200 containing the inserted support system 302 can be positioned within a debinding enclosure 500. The debinding enclosure 500 can be configured to supply a predetermined environment (e.g., temperature, pressure, content, etc.) for debinding the green body 200 and the support system 302.

In one aspect, the debinding enclosure 500 can include a heater 502 in communication with a controller (not shown) configured to regulate a temperature of the enclosure according to a predetermined debinding temperature profile (time as a function of temperature) to remove a predetermined portion of the green body binder 504 from the green body. Generally, the temperature profile can be varied for different compositions of the binder 504. As an example, the debinding temperature profile can be selected based upon a thermogravimetric analysis (TGA).

The debinding enclosure 500 can include an inlet 506 and an exhaust 510. The inlet 506 can be in fluid communication with one or more gases. The exhaust 510 can be in fluid communication with a fan or pump configured to apply a negative pressure to the enclosure 500 sufficient to extract gas(es) from the enclosure.

In certain embodiments, debinding can be performed according to a catalytic debinding process. As an example, a highly concentrated acid can be supplied to the enclosure 500 at an elevated temperature (e.g., below a softening temperature of the binder) to create a gaseous acid environment. The acid can include, but is not limited to, concentrated nitric acid and concentrated oxalic acid. The acid can act as a catalyst in decomposition of the binder. Reaction products can be vented through the exhaust 510.

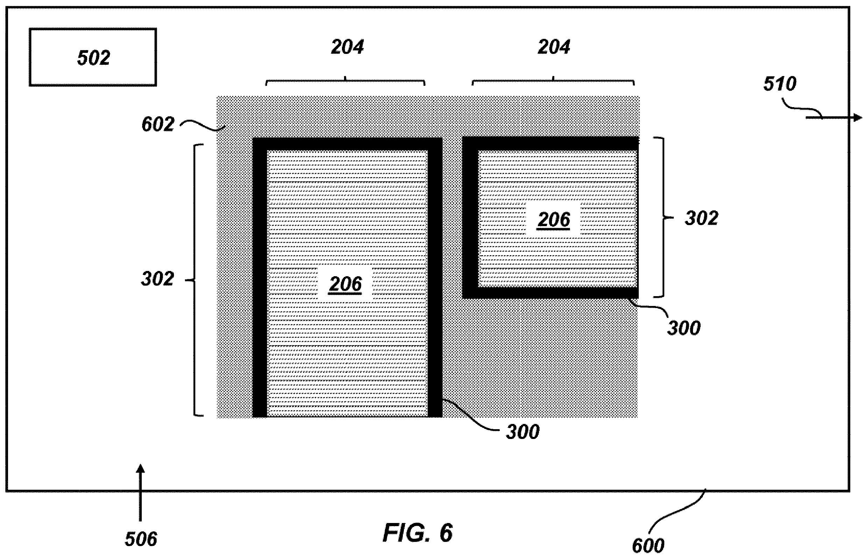

In an embodiment, operation 112 of the method 100 of FIG. 1 can include subjecting the debinded green body 602 and the support system 302 to a predetermined sintering temperature to form a consolidated work piece including a predetermined porosity. As shown in FIG. 6, the debinded green body 602 containing the inserted support system 302 can be positioned within a sintering enclosure 600. The sintering enclosure 600 can be configured to supply a predetermined environment (e.g., temperature, pressure, content, etc.) for sintering the debinded green body 602 and the support system 302. In certain embodiments, the sintering enclosure 600 can be the same as the debinding enclosure discussed above, including the heater 502, inlet 506, and exhaust 510. Optionally, the debinding operation 106 can be omitted from the method 100 and debinding and sintering can be performed concurrently on the green body 200 and the support system 302.

As an example, the predetermined sintering temperature profile can be selected based upon the composition of the green body 200, 602, as well as the gas environment of the sintering enclosure 600. In certain embodiments, the predetermined sintering temperature profile can be configured to achieve a green body porosity less than 5% on the basis of an amount of porosity present prior to sintering. In further embodiments, the predetermined sintering temperature profile can be configured to achieve a green body porosity within the range from about 1% porosity to about 5% porosity on the basis of an amount of porosity present prior to sintering.

As discussed above, in certain embodiments, the support structure 206 can exhibit a rate of volumetric reduction during sintering that is approximately equal to a rate of volumetric contraction of a void space 202 in which it is received. In this manner, the support structure 206 can support the green body 200, 602 sufficiently during manufacturing to avoid undesired deformation, cracking, and/or failure of the green body 200, 602.

As further discussed above, the behavior of the non-adhering material 300 during sintering can vary. In one aspect, the non-adhering material 300 can remain unsintered at the temperatures of the predetermined sintering temperature profile. In another aspect, the non-adhering material 300 can sinter to itself but not to the green body 200, 602 at the temperatures of the predetermined sintering temperature profile. In a further aspect, the non-adhering material can undergo a chemical and/or physical reaction to form a modified non-adhering material configured to inhibit adhesion of the support structure from the green body 200, 602 and sintered work piece 700 according to any of the above-noted mechanisms.

In an embodiment, operation 114 of the method 100 of FIG. 1 can include removing the support system 302 from the sintered work piece 700. This removal can be accomplished manually or using tools. In certain embodiments, the support system 302 can be removed using a robotic arm or a computer numeric control (CNC) machine.

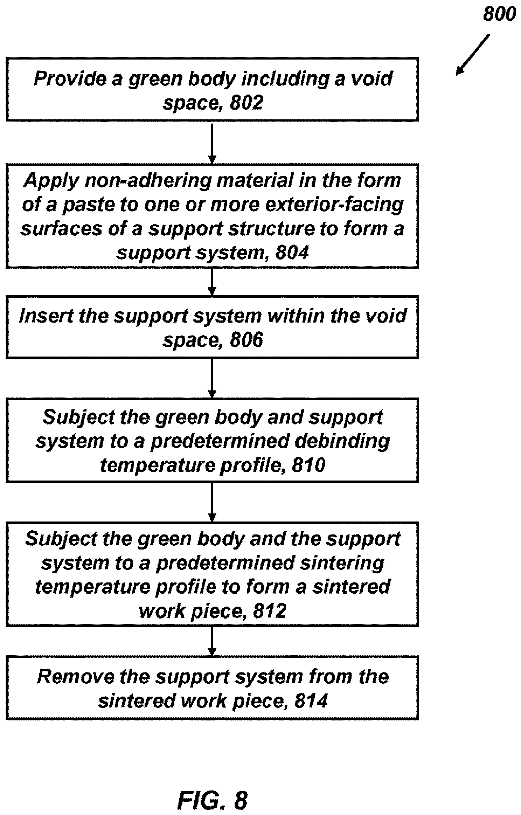

FIG. 8 is a flow diagram illustrating an exemplary embodiment of a method 800 for removal of a broken support structure from a near net shape manufactured part. As discussed above, the support structure can be a support structure that is employed for forming a green body. In order to reduce costs and manufacturing time, it can be desirable to salvage broken support structures rather than produce new support structures.

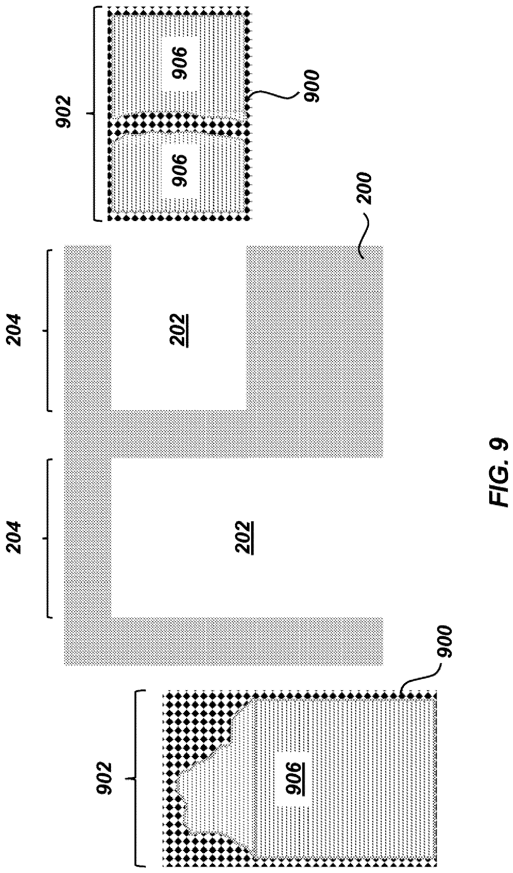

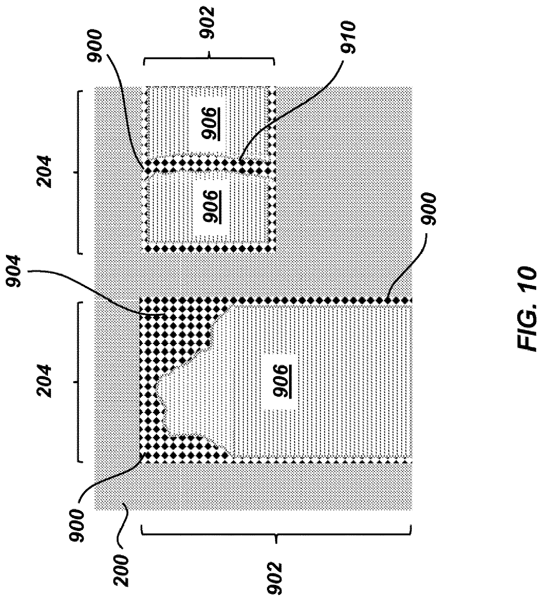

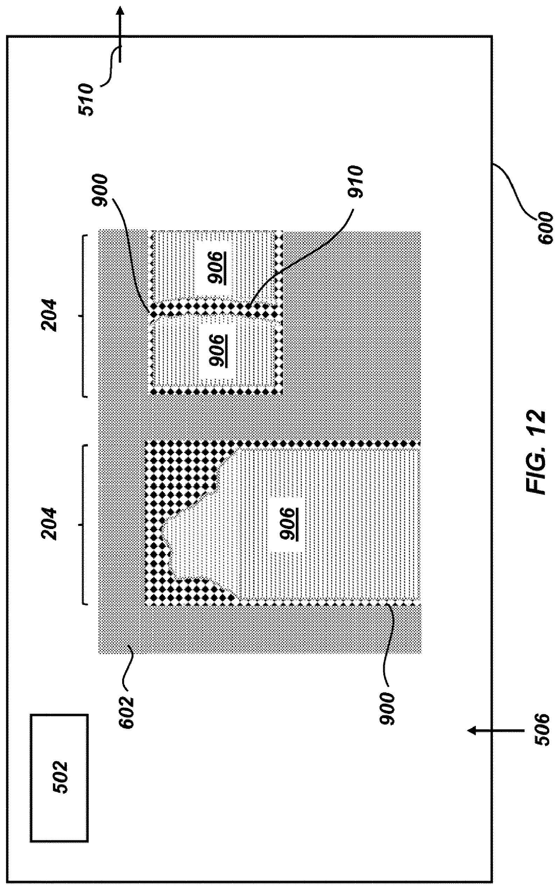

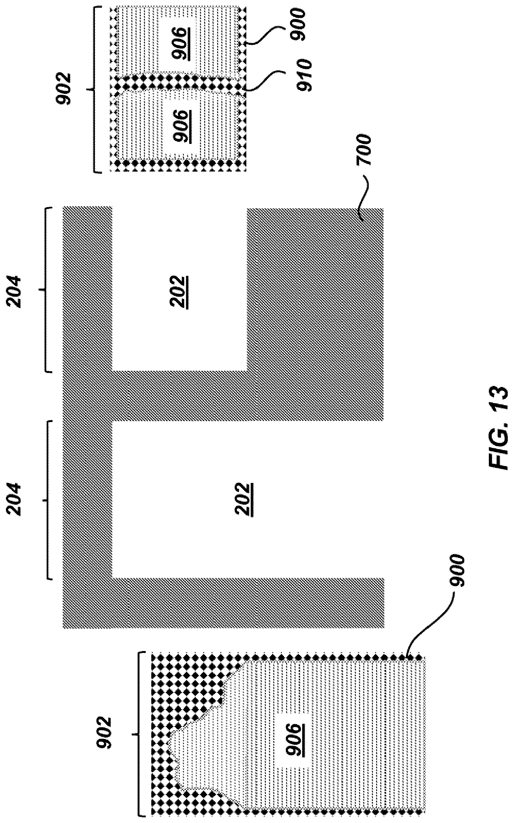

The method 800 of FIG. 8 is discussed below with respect to FIGS. 9-14. As illustrated, the method 800 includes operations 802-814. However, it can be understood that, selected operations of the method 800 of FIG. 8 can be performed in an order different than that illustrated and one or more operations can be added or removed without limit.

In an embodiment, operation 802 of the method 800 of FIG. 8 includes providing a porous green body formed from at least one green body powder and at least one green body binder. As illustrated in FIG. 9, this formed green body can be the same as green body 200 and it can include the void space 202 defined by the overhang region 204 of the green body 200. The green body composition and process of manufacturing the green body 200 can be the same as that discussed above with respect to the method 100 of FIG. 1.

In an embodiment, operation 804 of the method 800 of FIG. 8 can include applying a non-adhering material 900 in the form of a paste to one or more predetermined exterior-facing surfaces of a broken support structure 906 while the broken support structure 906 is distanced from the void space 202 of the green body 200 to form a broken support system 902 (FIGS. 9-10). As illustrated in FIG. 9, a geometry of the exterior facing surfaces of the broken support structure 906 can fail to mirror a geometry of the opposed surfaces of its corresponding void space 202 of the green body 200. Thus, a gap 904 can be present between the at least a portion of exterior facing surfaces of the broken support structure 906 and the opposed surface of the green body 200. Alternatively, a gap 910 can be present between different portions of the broken support structure 906 (e.g., under circumstances where the broken support structure 906 has two or more pieces). In an embodiment, the gap can extend a distance greater than a threshold amount. The threshold amount can be about 250 µm.

The composition of the support structure and process of manufacturing the broken support structure 906 can be the same as that discussed above with respect to the support structure 206 of the method 100 of FIG. 1. The composition of the non-adhering material 900 can be the same as that described above with respect to non-adhering material 300 of the method 100 of claim 1 or modified by addition of one or more thickening agents to increase the viscosity of the non-adhering material composition.

The non-adhering material 900 can be applied to predetermined exterior-facing surfaces of the broken support structure 906 in a variety of ways. In one embodiment, the non-adhering material 900 can be applied to fill all incipient gaps 904, 910 and other exterior-facing surfaces that will be positioned opposite the green body 200. In another embodiment, the non-adhering material 900 can be applied to completely encapsulate the broken support structure 906. In a further embodiment, the non-adhering material 900 can be applied to completely encapsulate the green body 200. The broken support system 906 so formed can be subsequently inserted within the void space 202.

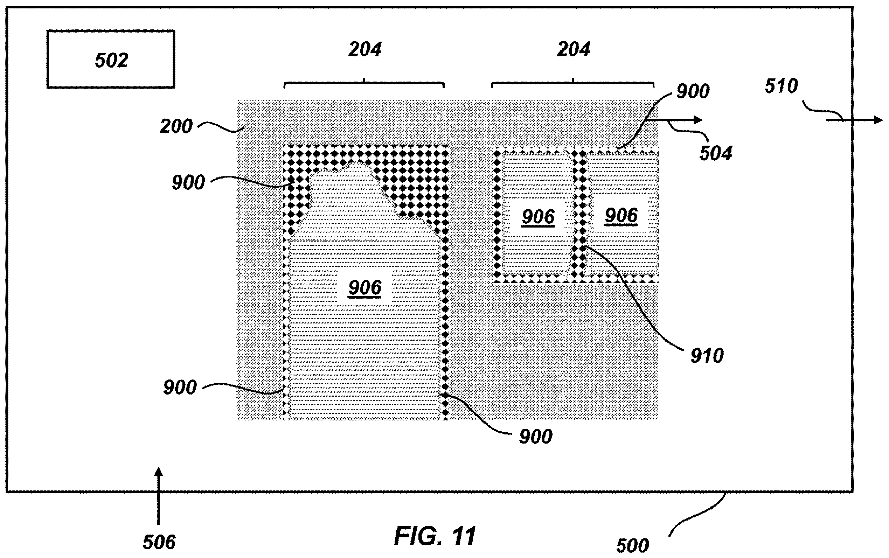

The remaining insertion, debinding, sintering, and removing operations of the method 800 of FIG. 8, illustrated in FIGS. 11-13, can be performed similarly to the corresponding operations of the method 100 of FIG. 1 discussed with regards to FIGS. 5-7. That is, operations 806, 810, 812, and 814 of method 800 can be performed as discussed above with regards to operations 106, 110, 112, and 114 of method 100, respectively.

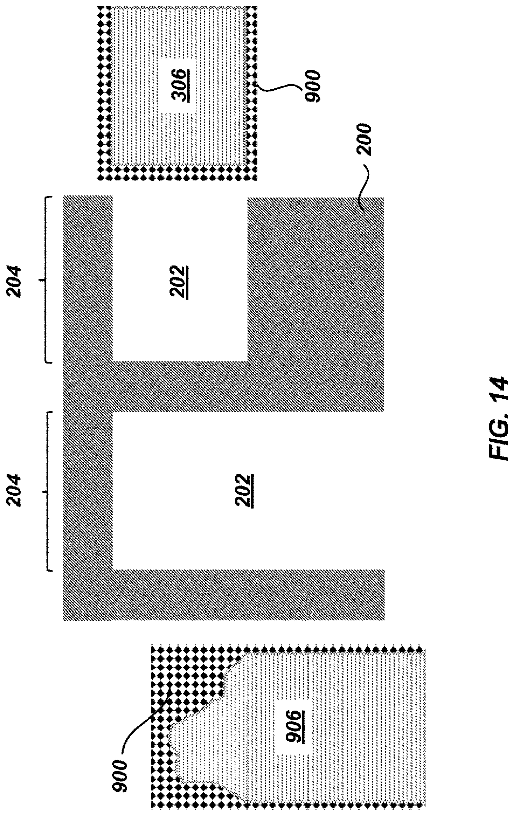

In certain embodiments, combinations of intact support systems 302 and broken support systems 902 can be employed, as illustrated in FIG. 14.

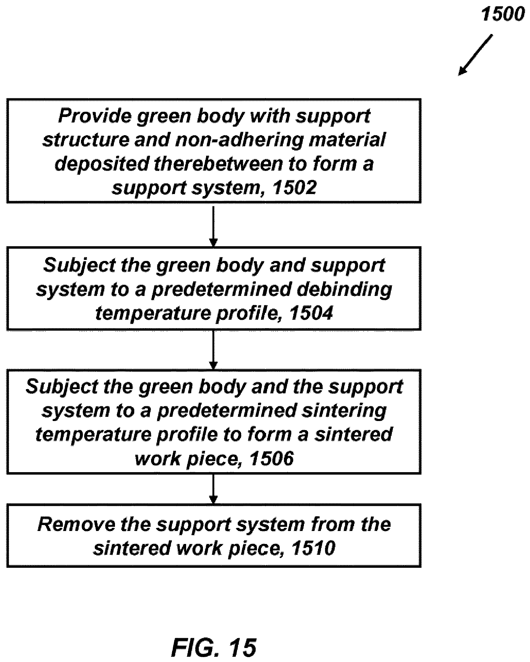

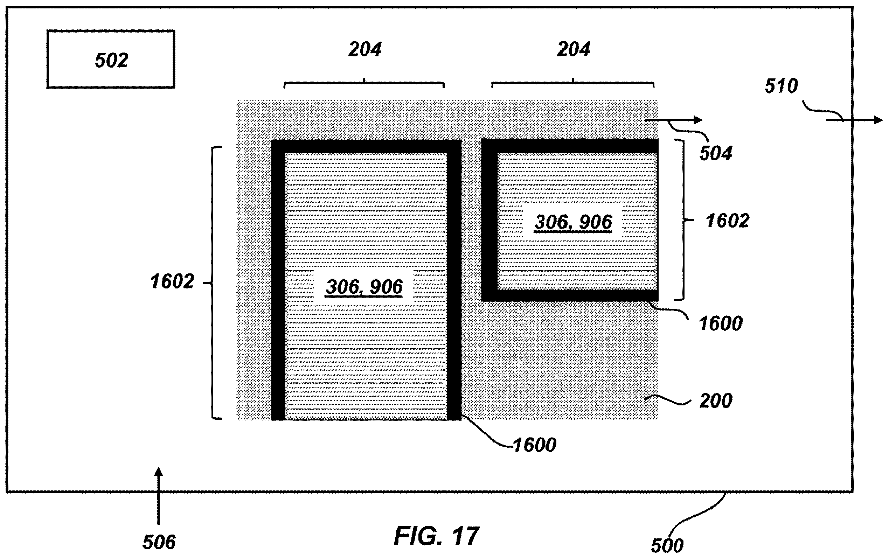

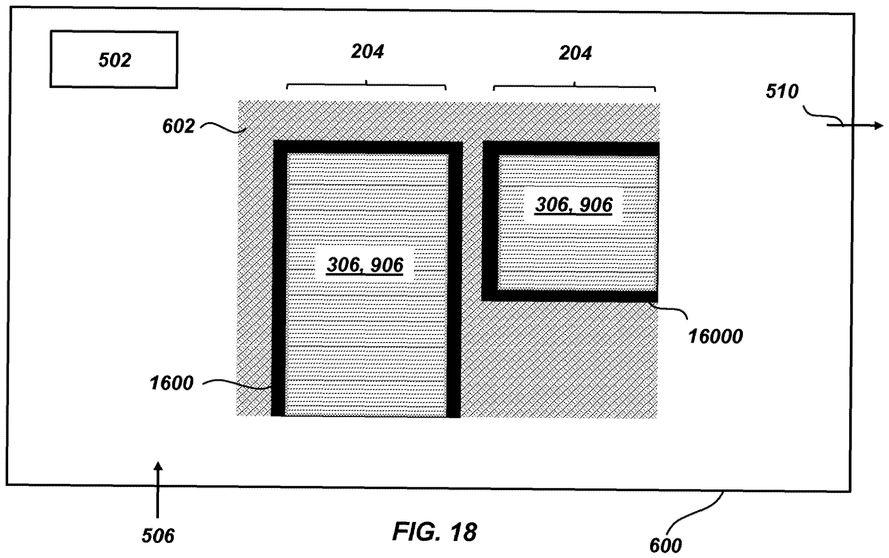

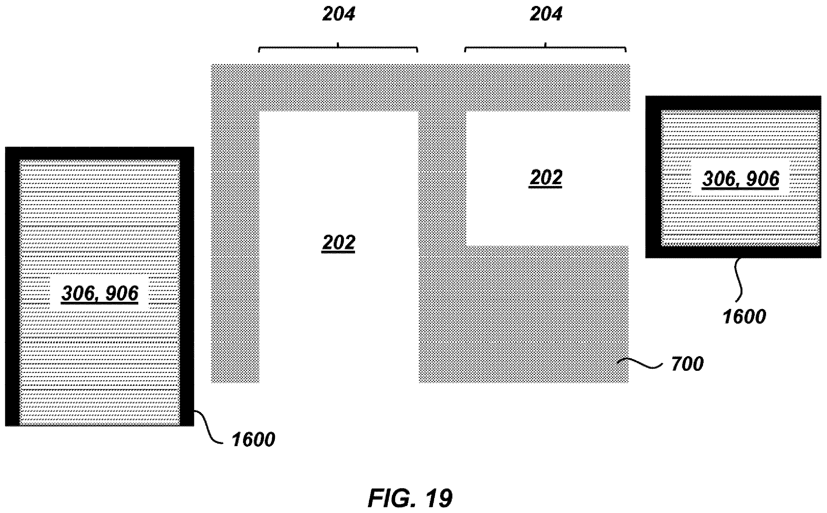

FIG. 15 is a flow diagram illustrating an exemplary embodiment of a method 1500 for removal of a support structure from a near net shape manufactured part. The method 1500 of FIG. 15 is discussed below with respect to FIGS. 17-19. As shown, method 1500 includes operations 1502-1510. It can be understood that, selected operations of the method 1500 of FIG. 15 can be performed in an order different than that illustrated and one or more operations can be added or removed without limit.

In an embodiment, operation 1502 of the method 1500 of FIG. 15 includes providing a porous green body formed from at least one green body powder and at least one green body binder. As illustrated in FIG. 15, the formed green body can be the same as green body 200 and it can include the void space 202 defined by the overhang region 204 of the green body 200.

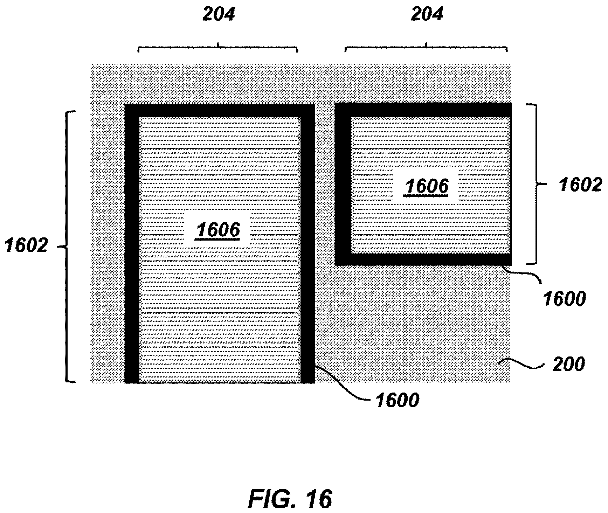

A support system 1602 is positioned within the void space 202 of the porous green body 200 as defined by the overhang region 204. That is, the support system 1602 is formed concurrently with the green body 200. As illustrated in FIG. 16, the support system 1602 can include a support structure 1606 and a non-adhering material 1600 including layers of a non-adhering composition interposed between the green body 200 and the support structure 1506. The support structure 1606 can be the support structure 306, the broken support structure 906, and combinations thereof. In certain embodiments, the green body 200, the support structure 1606, and the non-adhering material 1600 can be formed concurrently by an additive manufacturing process, as discussed above.

In certain embodiments, the composition of the support structure 1606, and process of manufacturing the support structure 1606, can be the same as that discussed above with respect to the method 100 of FIG. 1. The composition of the non-adhering material 1600 can be the same as that described above with respect to the method 100 of claim 1.

In another embodiment, the non-adhering material 1600 can be formed in situ. That is, while the support structure 1606 is positioned within the void space 202. Thus, the operation of deposition/application of the non-adhering material 1600 to the support structure 1606 while the support structure 1606 is positioned outside of the void space 202 can be avoided. In one example, reagents can be deposited sequentially through a single channel of a single print head of an additive manufacturing device. In another example, reagents can be concurrently deposited through different channels of a single print head of an additive manufacturing device. In a further example, reagents can be deposited through a single channel of respective print heads of an additive manufacturing device.

In one embodiment, the reagents can include a water soluble salt of a heavy metal and a hydroxide or a salt of a weak acid that thermally decomposes to form at least one of a water insoluble hydroxide or an inorganic material capable of dissolution in a solvent and recovered by drying. The hydroxide can be sodium hydroxide and the salt of a weak acid can be a sodium or a potassium salt.

The remaining debinding, sintering, and removing operations the method of FIG. 15, illustrated in FIGS. 17-19, can be performed similarly to the corresponding operations of the method 100 of FIG. 1 discussed with regards to FIGS. 5-7. That is, operations 1504, 1506, and 1510 of the method 1500 can be performed as discussed above with regards to operations 110, 112, and 114, respectively, of method 100.

In certain embodiments, a support structure may not be needed to support the green body during formation. This circumstance can arise when the void space is relatively small. Under such circumstance, formation of the support structure with the green body can be omitted and the non-adhering material (e.g., in the form of a paste, such as non-adhering material 900) can be employed to fill the void space and avoid damage to the green body during debinding and/or sintering. In an embodiment, the non-adhering material can fill all or approximately all of the void space, as compared to the embodiment of FIGS. 9-14, where only the gap between the broken support structure 906 and the green body 200 is filled with the non-adhering material 900.

As discussed above, in certain embodiments, the support structure can be formed from a single body and the non-adhering material can be positioned on outer surfaces of the support structure (e.g., between the part and the support structure). In alternative embodiments, the support structure can be additively manufactured as a plurality of pieces smaller than the support structure, referred to herein as support sub-structures. The support sub-structures can be stackable, nesting, and/or interlocking so as to adopt the geometry and size of the void space within the part.

Embodiments of the support sub-structures can adopt a variety of configurations. In one aspect, the geometry and/or size of respective support sub-structures can be the same. In another aspect, one or more of the support sub-structures can have a geometry and/or size that differs from others of the support sub-structures. In an additional aspect, support sub-structures distanced from the part (e.g., within the interior of the overall support structure) can adopt a base configuration having a single size and geometry and support sub-structures adjacent to the part (e.g., separated from the part by the non-adhering material) can be modified in size and/or geometry from the base configuration to mimic the contour of the part.

The non-adhering material can be deposited not only at the interface between the part and the support structure but at interfaces between respective support sub-structures. That is, outer surface of each of the support sub-structures can be coated with the non-adhering material. In this manner, the support sub-structures can be detached from one another with similar ease discussed above with respect to the support structure from the part. Such configurations can be advantageous under circumstances where a single, large support structure cannot be easily removed from the part, such as support structures formed with a high fraction of a relatively rigid material (e.g., metals, ceramics).

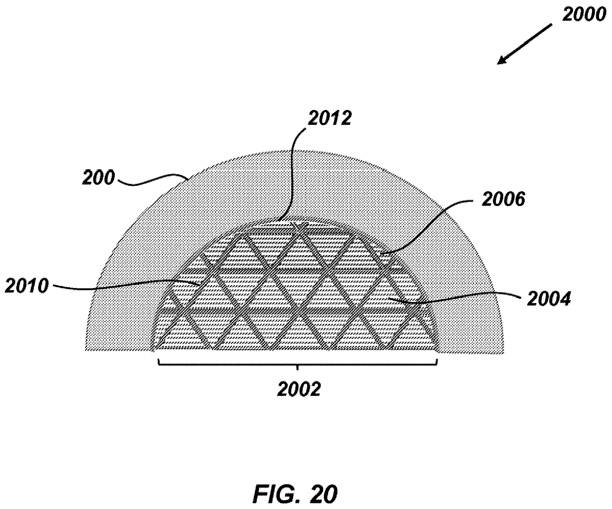

One example of a support system 2000 including support sub-structures 2002 is illustrated in FIGS. 20-21. As shown, the support sub-structures 2002 are formed as a plurality of pyramids that are tightly nested with respect to one another. As an example, the plurality of pyramids can include first pyramids 2004 and second pyramids 2006. The first pyramids 2004 are distanced from the green body 200 and possess a regular pyramidal shape. The second pyramids 2006 are positioned adjacent to the green body 200 and are truncated to adopt a geometry that mimics the contour of the void space of the green body 200 in which the support system 2000 is positioned. In this manner, the plurality of pyramids, taken together, substantially fill the void space of the green body in which they are positioned.

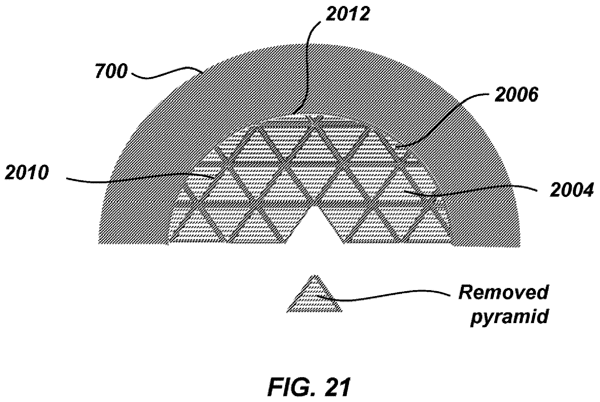

A first portion of the non-adhering material 2010 is positioned between respective ones of the first pyramids 2004 and/or second pyramids 2006, while a second portion 2012 of the non-adhering material is positioned between the second pyramids 2006 and inward facing surfaces of the green body 200. As further illustrated in FIG. 21, the first and second portions 2010, 2012 of the non-adhering material facilitate removal of individual ones of the plurality of pyramids 2004, 2006 from the sintered work piece 700.

It can be understood that, while the embodiments of FIGS. 20-21 illustrate support sub-structures in the form of pyramids, polyhedrons of any size and geometry can be employed, in any combination, without limit.

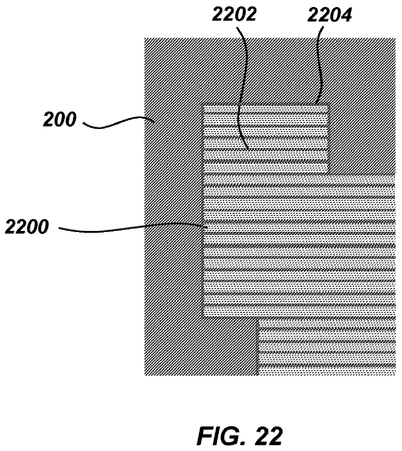

Another example of a support system including support sub-structures is illustrated in FIGS. 22-23. As shown, the support sub-structures are formed as a plurality of horizontally extending plates 2200 stacked upon one another. The plurality of plates 2200 are dimensioned such that, taken together, they substantially fill the void space of the green body 200 in which they are positioned.

In further embodiments, the thickness of respective ones of the plurality of plates 2200 can be individually selected, as necessary. In one aspect, the thickness of each of the plurality of plates 2200 can be approximately equal. In another aspect, the thickness of one or more of the plurality of plates 2200 can be different from others of the plurality of plates 2200.

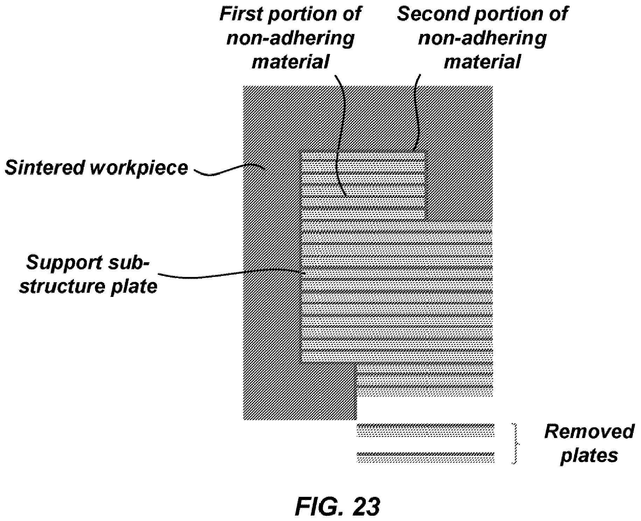

As illustrated, a first portion 2202 of the non-adhering material is positioned between respective ones of the plates 2200, while a second portion 2204 of the non-adhering material is positioned between the plates 2200 and inward facing surfaces of the green body 200. As further illustrated in FIG. 23, the first and second portions 2202, 2204 of the non-adhering material facilitate removal (e.g., peeling) of individual ones of the plurality of plates 2200 from the sintered work piece 700 (removed plates 2300).

Embodiments of the non-adhering material can adopt a variety of configurations. In one aspect, the first portion 2202 of the non-adhering material can be deposited between each plate. In another aspect, the first portion 2202 of the non-adhering material can be deposited after a selected number of plates are formed upon one another. The selected number of plates can be constant or varied. In one embodiment, the first portion 2202 of the non-adhering material can be deposited after five plates are formed upon one another

One skilled in the art can appreciate that the present subject matter is well adapted to carry out the objects and obtain the ends and advantages mentioned, as well as those inherent therein. The details of the description and the examples herein are representative of certain embodiments, are exemplary, and are not intended as limitations on the scope of the disclosed embodiments. Modifications therein and other uses will occur to those skilled in the art. These modifications are encompassed within the spirit of the disclosed embodiments. It will be readily apparent to a person skilled in the art that varying substitutions and modifications may be made to the embodiments disclosed herein without departing from the scope and spirit of the disclosure.

The articles "a" and "an" as used herein in the specification and in the claims, unless clearly indicated to the contrary, should be understood to include the plural referents. Claims or descriptions that include "or" between one or more members of a group are considered satisfied if one, more than one, or all of the group members are present in, employed in, or otherwise relevant to a given product or process unless indicated to the contrary or otherwise evident from the context. The disclosure includes embodiments in which exactly one member of the group is present in, employed in, or otherwise relevant to a given product or process. The disclosure also includes embodiments in which more than one, or all of the group members are present in, employed in, or otherwise relevant to a given product or process. Furthermore, it is to be understood that the disclosed embodiments provide all variations, combinations, and permutations in which one or more limitations, elements, clauses, descriptive terms, etc., from one or more of the listed claims is introduced into another claim dependent on the same base claim (or, as relevant, any other claim) unless otherwise indicated or unless it would be evident to one of ordinary skill in the art that a contradiction or inconsistency would arise. It is contemplated that all embodiments described herein are applicable to all different aspects of the disclosed embodiments where appropriate. It is also contemplated that any of the embodiments or aspects can be freely combined with one or more other such embodiments or aspects whenever appropriate. Where elements are presented as lists, e.g., in Markush group or similar format, it is to be understood that each subgroup of the elements is also disclosed, and any element(s) can be removed from the group. It should be understood that, in general, where the disclosed embodiments, or aspects of the disclosed embodiments, is/are referred to as comprising particular elements, features, etc., certain embodiments of the disclosure or aspects of the disclosure consist, or consist essentially of, such elements, features, etc. For purposes of simplicity those embodiments have not in every case been specifically set forth in so many words herein. It should also be understood that any embodiment or aspect of the disclosure can be explicitly excluded from the claims, regardless of whether the specific exclusion is recited in the specification. For example, any one or more active agents, additives, ingredients, optional agents, types of organism, disorders, subjects, or combinations thereof, can be excluded.

Where the claims or description relate to a composition of matter, it is to be understood that methods of making or using the composition of matter according to any of the methods disclosed herein, and methods of using the composition of matter for any of the purposes disclosed herein are aspects of the disclosed embodiments, unless otherwise indicated or unless it would be evident to one of ordinary skill in the art that a contradiction or inconsistency would arise. Where the claims or description relate to a method, e.g., it is to be understood that methods of making compositions useful for performing the method, and products produced according to the method, are aspects of the disclosed embodiments, unless otherwise indicated or unless it would be evident to one of ordinary skill in the art that a contradiction or inconsistency would arise.

Where ranges are given herein, embodiments of the disclosure include embodiments in which the endpoints are included, embodiments in which both endpoints are excluded, and embodiments in which one endpoint is included and the other is excluded. It should be assumed that both endpoints are included unless indicated otherwise. Furthermore, it is to be understood that unless otherwise indicated or otherwise evident from the context and understanding of one of ordinary skill in the art, values that are expressed as ranges can assume any specific value or subrange within the stated ranges in different embodiments of the disclosure, to the tenth of the unit of the lower limit of the range, unless the context clearly dictates otherwise. It is also understood that where a series of numerical values is stated herein, the disclosure includes embodiments that relate analogously to any intervening value or range defined by any two values in the series, and that the lowest value may be taken as a minimum and the greatest value may be taken as a maximum. Numerical values, as used herein, include values expressed as percentages.

As used herein "A and/or B", where A and B are different claim terms, generally means at least one of A, B, or both A and B. For example, one sequence which is complementary to and/or hybridizes to another sequence includes (i) one sequence which is complementary to the other sequence even though the one sequence may not necessarily hybridize to the other sequence under all conditions, (ii) one sequence which hybridizes to the other sequence even if the one sequence is not perfectly complementary to the other sequence, and (iii) sequences which are both complementary to and hybridize to the other sequence.

Any embodiment in which a numerical value is prefaced by "about" or "approximately" includes an embodiment in which the exact value is recited. For any embodiment of the disclosure in which a numerical value is not prefaced by "about" or "approximately", the disclosure includes an embodiment in which the value is prefaced by "about" or "approximately". "Approximately" or "about" can include numbers that fall within a range of 1% or in some embodiments within a range of 5% of a number or in some embodiments within a range of 10% of a number in either direction (greater than or less than the number) unless otherwise stated or otherwise evident from the context (except where such number would impermissibly exceed 100% of a possible value).

It should be understood that, unless clearly indicated to the contrary, in any methods claimed herein that include more than one act, the order of the acts of the method is not necessarily limited to the order in which the acts of the method are recited, but the disclosure includes embodiments in which the order is so limited. It should also be understood that unless otherwise indicated or evident from the context, any product or composition described herein may be considered "isolated".

As used herein the term "comprising" or "comprises" is used in reference to compositions, methods, and respective component(s) thereof, that are essential to the disclosed embodiments, yet open to the inclusion of unspecified elements, whether essential or not.

As used herein the term "consisting essentially of" refers to those elements required for a given embodiment. The term permits the presence of additional elements that do not materially affect the basic and novel or functional characteristic(s) of that embodiment of the disclosure.

The term "consisting of" refers to compositions, methods, and respective components thereof as described herein, which are exclusive of any element not recited in that description of the embodiment.

Although a few variations have been described in detail above, other modifications or additions are possible.

In the descriptions above and in the claims, phrases such as "at least one of" or "one or more of" may occur followed by a conjunctive list of elements or features. The term "and/or" may also occur in a list of two or more elements or features. Unless otherwise implicitly or explicitly contradicted by the context in which it is used, such a phrase is intended to mean any of the listed elements or features individually or any of the recited elements or features in combination with any of the other recited elements or features. For example, the phrases "at least one of A and B;" "one or more of A and B;" and "A and/or B" are each intended to mean "A alone, B alone, or A and B together." A similar interpretation is also intended for lists including three or more items. For example, the phrases "at least one of A, B, and C;" "one or more of A, B, and C;" and "A, B, and/or C" are each intended to mean "A alone, B alone, C alone, A and B together, A and C together, B and C together, or A and B and C together." In addition, use of the term "based on," above and in the claims is intended to mean, "based at least in part on," such that an unrecited feature or element is also permissible.

The subject matter described herein can be embodied in systems, apparatus, methods, and/or articles depending on the desired configuration. The implementations set forth in the foregoing description do not represent all implementations consistent with the subject matter described herein. Instead, they are merely some examples consistent with aspects related to the described subject matter. Although a few variations have been described in detail above, other modifications or additions are possible. In particular, further features and/or variations can be provided in addition to those set forth herein. For example, the implementations described above can be directed to various combinations and sub-combinations of the disclosed features and/or combinations and sub-combinations of several further features disclosed above. In addition, the logic flows depicted in the accompanying figures and/or described herein do not necessarily require the particular order shown, or sequential order, to achieve desirable results. Other implementations may be within the scope of the following claims.

Although the present invention is defined in the attached claims, it should be understood that the present invention can also (alternatively) be defined in accordance with the following embodiments:
1. A system, comprising:
   a porous green body comprising layers of a green body composition, the green body including a geometry including a predetermined void space defining an overhang region;
   a support system comprising a support structure and a non-adhering material, the support structure including layers of a support composition and the non-adhering material including layers of a non-adhering composition, wherein the non-adhering material is interposed between the green body and the support structure;
   wherein the support system is positioned within a void space of the porous green body defined by an overhang region of the porous green body; and
   wherein, in response to the porous green body undergoing a thermally-induced volumetric change, the support system supports the overhang region, and the non-adhering material inhibits adherence of exterior-facing surfaces of the support structure to opposed surfaces of the void space.
2. The system of embodiment 1, wherein the support system is configured to undergo a volumetric change that occurs at a rate that is approximately equal to a volumetric change of the void space.
3. The system of embodiment 1, wherein the support system is configured to maintain at least a portion of the support structure in contact with an underlying surface of the overhang region.
4. The system of embodiment 1, wherein the layers of the green body are formed from a green body composition comprising at least one green body powder and at least one green body binder.
5. The system of embodiment 4, wherein the at least one green body powders comprise at least one of metal powders or ceramic powders.
6. The system of embodiment 4, wherein the at least one green body binder comprises an organic polymer.
7. The system of embodiment 1, wherein the layers of the support structure are formed from a support structure composition comprising at least one support powder and at least one support binder.
8. The system of embodiment 7, wherein the at least one support powder comprise at least one of metal powders or ceramic powders.
9. The system of embodiment 7, wherein the at least one support binder comprises at least one of an organic polymer or an inorganic material.
10. The system of embodiment 1, wherein the green body and the support structure are formed from the same material.
11. The system of embodiment 1, wherein the non-adhering composition comprises at least one non-adhering powder dispersed in at least one non-adhering binder.
12. The system of embodiment 11, wherein a mean particle size of at least one non-adhering powders is approximately equal to a mean particle size of the at least one green body powders.
13. The system of embodiment 11, wherein a mean particle size of the at least one non-adhering powders is less than 250 µm.
14. The system of embodiment 11, wherein a maximum particle size of at least one non-adhering powder is less than a thickness of the layers containing the non-adhering material.
15. The system of embodiment 1, wherein, in response to the green body undergoing a thermally-induced volumetric change, the support system is configured to undergo a volumetric change at a rate that is approximately equal to a rate of volumetric change of the void space.
16. The system of embodiment 1, wherein, in response to the green body undergoing a thermally-induced volumetric change, the support system is configured such that at least a portion of exterior-facing surfaces of the non-adhering material remain in contact with the green body.
17. The system of embodiment 1, wherein the non-adhering material is formed from reagents configured to undergo a chemical and/or physical reaction in combination to form the non-adhering material.
18. The system of embodiment 17, wherein the reagents comprise:
   a water soluble salt of a heavy metal; and
   a hydroxide or a salt of a weak acid that thermally decomposes to form at least one of:
      a water insoluble hydroxide; or
      an inorganic material capable of dissolution in a solvent and recovered by drying.
19. The system of embodiment 18, wherein the hydroxide is sodium hydroxide and the salt of a weak acid is a sodium or a potassium salt.
20. The system of embodiment 1, wherein the support system comprises a plurality of support sub-structures having a portion of the non-adhering material interposed between respective ones of the support sub-structures.
21. The system of embodiment 20, wherein the support sub-structures are pyramids or plates.

## Claims

1. A system, comprising:
a support structure; and
a non-adhering material positioned on one or more predetermined exterior-facing surfaces of the support structure;
wherein the support system is dimensioned for receipt within a void space of a porous green body defined by an overhang region of the porous green body;
wherein, after receipt within a void space of a porous green body that undergoes a thermally-induced volumetric change, the support system is configured to support the overhang region and the non-adhering material is configured to inhibit adherence of the exterior-facing surfaces of the support structure to opposed surfaces of the void space.

2. The system of claim 1, wherein, after receipt of a green body that undergoes a thermally-induced volumetric change, the support system is configured to undergo a volumetric change that occurs at a rate that is approximately equal to the rate of volumetric change of the void space.

3. The system of claim 1, wherein, after receipt of a green body that undergoes a thermally-induced volumetric change, the support system is configured to maintain at least a portion of the support structure in contact with an underlying surface of the overhang region.

4. The system of claim 1, wherein the support structure is formed from a support composition comprising at least one support powder and at least one support binder.

5. The system of claim 4, wherein the at least one support powder comprises at least one of metal powders or ceramic powders.

6. The system of claim 4, wherein the support binder comprises at least one of an organic polymer or an inorganic material.

7. The system of claim 1, wherein the non-adhering material is formed from a non-adhering composition comprising at least one non-adhering powder dispersed in at least one non-adhering binder.

8. The system of claim 7, wherein a mean particle size of the at least one non-adhering powder is approximately equal to a mean particle size of the at least one green body powder.

9. The system of claim 7, wherein a mean particle size of the at least one non-adhering powder is less than 250 µm.

10. The system of claim 7, wherein the at least one non-adhering binder comprises an organic polymer.

11. The system of claim 1, wherein a geometry of exterior-facing surfaces of the support structure are configured to substantially mirror a geometry of opposed surfaces of a void space of a green body that the support structure is dimensioned for receipt within.

12. The system of claim 11, wherein the non-adhering material is in the form of a coating on the exterior-facing surfaces of the support structure.

13. The system of claim 1, wherein a geometry of exterior-facing surfaces of the support structure does not substantially mirror a geometry of opposed inward facing surfaces of a void space of a green body that the support structure is dimensioned for receipt within, and wherein the non-adhering material is in the form of a paste that is configured to fill one or more gaps between the exterior-facing surfaces of the support structure and the opposed surfaces of the void space.

14. The system of claim 1, wherein the support system includes a plurality of support sub-structures having a portion of the non-adhering material interposed between respective ones of the support sub-structures.

15. The system of claim 14, wherein the support sub-structures are pyramids or plates.
